# EUROPÄISCHE PATENTSCHRIFT

(11) **EP 1 813 122 B1**
(45) Veröffentlichungstag und Bekanntmachung des Hinweises auf die Patenterteilung: **03.02.2016**
(21) Anmeldenummer: 05801867.2
(22) Anmeldetag: 02.11.2005
(51) Int. Cl.: H04W 4/26, H04M 1/725

(54) **EINRICHTUNG UND VERFAHREN ZUM ANZEIGEN VON INFORMATIONEN FÜR MOBILFUNKENDGERÄTE**
DEVICE AND METHOD FOR DISPLAYING INFORMATION FOR MOBILE RADIO TERMINALS
DISPOSITIF ET PROCÉDÉ POUR AFFICHER DES INFORMATIONS POUR TERMINAUX MOBILES

(30) Priorität: 19.11.2004 DE 102004056047
(43) Veröffentlichungstag der Anmeldung: 01.08.2007
(73) Patentinhaber: Vodafone Holding GmbH, 40213 Düsseldorf (DE)
(72) Erfinder: PLÜCKER, Ralf, 40219 Düsseldorf (DE); NARDO, Stefano, 40627 Düsseldorf (DE)
(74) Vertreter: Weisbrodt, Bernd
(86) Internationale Anmeldenummer: PCT/EP2005/011674
(87) Internationale Veröffentlichungsnummer: WO 2006/053636

(56) Entgegenhaltungen:
- US-A1- 2001 037 348
- US-B1- 6 169 911

## Beschreibung

### Technisches Gebiet

Die Erfindung betrifft eine Einrichtung in einem Mobilfunknetz für ein Mobilfunkendgerät mit Auswahlmitteln zur Auswahl von Text- und/oder Bildinformationen aus einer Anzahl von Text- und/oder Bildinformationen, welche von einem Informationsserver vollständig oder teilweise an das Mobilfunkendgerät übermittelt und temporär in einem Datenspeicher des Mobilfunkendgeräts gespeichert werden, *wobei Teile der Text- und*/*oder Bildinformationen in einer Anzeige des Mobilfunkendgeräts sequentiell darstellbar sind, und Mittel zur Darstellung der vollständigen Text- und*/*oder Bildinformationen bei Auswahl der zugehörigen Teilinformation vorgesehen sind.* Ferner betrifft die Erfindung ein Verfahren für ein Mobilfunkendgerät in einem Mobilfunknetz mit einem Informationsserver, welcher eine Anzahl von Text- und/oder Bildinformationen vollständig oder teilweise an das Mobilfunkendgerät übermittelt, wobei die Text- und/oder Bildinformationen temporär in einem Datenspeicher des Mobilfunkendgeräts gespeichert, *Teile der Text- und*/*oder Bildinformationen sequentiell auf einer Anzeige dargestellt und bei Auswahl einer Teilinformation mit Auswahlmitteln die zugehörige vollständigen Text- und*/*oder Bildinformationen auf der Anzeige dargestellt werden.*

### Stand der Technik

Ein Mobilfunkendgerätbesitzer kann mittlerweile als Mobilfunkteilnehmer in einem Mobilfunknetz zahlreiche Dienste des Mobilfunkbetreibers oder anderer Dienstleister für sein Mobilfunkendgerät buchen. So ist bekannt, dass beispielsweise ein Nachrichtendienst gebucht werden kann. Dazu teilt der Mobilfunkendgerätebesitzer dem Mobilfunkbetreiber mit, dass er immer die neusten Nachrichten wünscht. Diese Nachrichten werden dem Mobilfunkteilnehmer gegen eine Gebühr beispielsweise als SMS (=Short Message Service) oder MMS (=Multimedia Messaging Service) ggf. auch als E-Mail übermittelt.

Um nicht mit überflüssigen Nachrichten überflutet zu werden und die entstehenden Kosten in Grenzen zu halten, kann der Mobilfunkteilnehmer die Nachrichten, welche er zu erhalten wünscht, beim Buchen eingrenzen. Der Mobilfunkbetreiber führt dazu entsprechende Listen, in denen die Wünsche der Kunden vermerkt sind. Der Mobilfunkteilnehmer gibt jeweils beim Buchen der Nachrichtendienstleistung an, dass er beispielsweise nur Sport- und/oder Börsennachrichten wünscht. Dies wird in der Liste festgehalten und der Mobilfunkteilnehmer erhält von dem Nachrichtendienstleister nur entsprechende Nachrichten. Die Nachricht wird als SMS in einem Datenspeicher des Mobilfunkengeräts temporär gespeichert, bis der Mobilfunkteilnehmer sie schließlich wieder löscht.

Die SMS-Nachrichten können nun von dem Mobilfunkteilnehmer wie herkömmliche SMS abgerufen und gelesen werden. Dazu aktiviert er die Menüführung seines Mobilfunkendgeräts und wählt die SMS mit der gewünschten Nachricht aus. Auf der Anzeige erscheint nun die Nachricht. Wenn die Nachricht gelesen wurde, kann sie gelöscht oder im Datenspeicher belassen werden.

*Die* US 6.169.911 B1 *beschreibt eine grafische Benutzeroberfläche für ein Mobilfunktelefon mit einer hochauflösenden Anzeige. Die grafische Benutzeroberfläche unterstützt neben der Benutzung eines Postfachs für elektronische Textnachrichten oder Sprachnachrichten auch einen Empfang von Nachrichten. Dabei werden einzeln Themenbereiche in einem Menü dargestellt. Durch Auswahl eines Menüpunktes wird einem Benutzer ein Untermenü mit entsprechenden Schlagzeilen angezeigt. Gleichzeitig ist eine Darstellung der entsprechenden Schlagzeilen in einem Nachrichtenticker als Laufschrift möglich. Durch Auswahl einer Schlagzeilen aus dem Menü wird die vollständige Nachricht für einen Benutzer auf dem Mobilfunktelefon dargestellt.*

*Ein* Nachteil bei diese*n* Vorgehensweise*n* besteht darin, dass der Mobilfunkteilnehmer immer die Nachrichtendienstleistung buchen muss. Ferner fallen dann regelmäßig Gebühren an, auch für Nachrichten und Informationen, die er nicht unbedingt wünscht.

### Offenbarung der Erfindung

Die Aufgabe der Erfindung wird daher darin gesehen, die Nachteile des Standes der Technik zu beseitigen und eine Einrichtung bzw. ein Verfahren zu schaffen, die dem Mobilfunkteilnehmer Informationen übermitteln, ohne eine Buchung bei einem Dienstleister vornehmen zu müssen und hierfür sofort Gebühren zu bezahlen.

Erfindungsgemäß wird die Aufgabe dadurch gelöst, dass bei einer Einrichtung in einem Mobilfunknetz für ein Mobilfunkendgerät der eingangs genannten Art *Mittel zum Sperren und*/*oder Freigeben der vollständigen Text- und*/*oder Bildinformationen und Gebührenerfassungsmittel vorgesehen sind, wobei die Gebührenerfassungsmittel die Gebühren für die an das Mobilfunkendgerät übermittelten vollständigen Text- und*/*oder Bildinformationen, die zur Ansicht ausgewählt wurden, erfassen.*

Weiterhin wird die Aufgabe durch ein entsprechendes Verfahren für ein Mobilfunkendgerät in einem Mobilfunknetz der eingangs genannten Art gelöst, bei dem *die Text- und*/*oder Bildinformationen zur vollständigen Ansicht auf der Anzeige gesperrt und*/*oder freigegeben werden können und Gebühren für die an das Mobilfunkendgerät übermittelten vollständigen Text- und*/*oder Bildinformationen, welche zur Ansicht ausgewählt wurden, erfasst werden.*

Die erfindungsgemäße Einrichtung bzw. das entsprechende Verfahren beruhen auf dem Prinzip, Text- und/oder Bildinformationen, über das Mobilfunknetz an ein Mobilfunkendgerät zu senden. Die Text- und/oder Bildinformationen werden dazu von einem Informationsserver gesammelt und an den Mobilfunkteilnehmer übermittelt. Der Informationsserver wird beispielsweise von einem Nachrichtendienstleister betrieben. Die an das Mobilfunkendgerät übermittelten Informationen werden dort in einem Speicher temporär gespeichert. Teile der Text- und/oder Bildinformationen, wie beispielsweise Schlagzeilen, werden nun auf einer Anzeige hintereinander dargestellt. Durch geeignete Auswahl, beispielsweise mit dem Cursor seines Menüs, kann der Mobilfunkteilnehmer eine Teilinformation, die ihn näher interessiert, anwählen. Anschließend steht dem Mobilfunkteilnehmer die vollständige Information zur Verfügung.

*Durch die Mittel zum Sperren und*/*oder Freigeben der vollständigen Text- und*/*oder Bildinformationen wird erreicht, dass bestimmte Nachrichten nicht ohne Berechtigung vollständig gelesen werden könnten. Dies kann z.B. sein, wenn die vollständigen Informationen, nicht jugendfrei sind, oder wenn eine Gebühr für die Berechtigung zur Anzeige der vollständigen Informationen erhoben wird. Es sind daher Gebührenerfassungsmittel vorgesehen, welche die Gebühren für die an das Mobilfunkendgerät übermittelten vollständigen Text- und*/*oder Bildinformationen, die zur Ansicht ausgewählt wurden, erfassen.*

*Entsprechend werden bei dem erfindungsgemäßen Verfahren die Text- und*/*oder Bildinformationen zur vollständigen Ansicht auf der Anzeige gesperrt und*/*oder freigegeben. Ziel dieser Maßnahme ist wiederum, dass bestimmte Nachrichten nicht ohne Berechtigung vollständig gelesen werden könnten. Dabei werden Gebühren für die an das Mobilfunkendgerät übermittelten vollständigen Text- und*/*oder Bildinformationen, welche zur Ansicht ausgewählt wurden, erfasst.*

Der Vorteil der sich aus der erfindungsgemäßen Einrichtung bzw. des entsprechenden Verfahrens gegenüber dem Stand der Technik ergibt, besteht darin, dass die Text-und/oder Bildinformationen automatisch übermittelt werden, ohne dass eine vorherige Buchung dieser Dienstleistung erfolgen muss. Das Mobilfunkendgerät muss lediglich auf Empfang für solche Informationsdienste gestellt werden. Der Mobilfunkteilnehmer kann sich danach aussuchen, welche Informationen er vollständig betrachten möchte.

Eine bevorzugte Ausbildung der erfindungsgemäßen Einrichtung ergibt sich ferner dadurch, dass die sequentiell dargestellten Teilinformationen als Laufschrift auf der Anzeige vorgesehen sind. Alternativ oder ggf. auch in Kombination zur Laufschrift sind Mittel zum Umblättern und/oder Umspringen der sequentiell dargestellten Teilinformationen auf der Anzeige vorgesehen. Diese Maßnahme ermöglicht es einem Mobilfunkteilnehmer sämtliche Teilinformationen auf der Anzeige seines Mobilfunkendgeräts darzustellen. Eine Information, die ihn besonders interessiert kann er leicht beispielsweise durch Betätigung einer Auswahltaste an seinem Mobilfunkendgerät auswählen. Dann wird ihm die vollständige Information angezeigt.

Eine vorteilhafte Ausgestaltung der erfindungsgemäßen Einrichtung in einem Mobilfunknetz für ein Mobilfunkendgerät ergibt sich durch Mittel zum zyklischen Austauschen der Teilinformationen, welche an das Mobilfunkendgerät übermittelt werden. Da die Informationen, die vom Informationsserver angeboten werden auch veralten können, bietet es sich an diese zyklisch auszutauschen. So werden ältere Informationen entfernt und neue hinzugefügt. Durch diese Maßnahme hat ein Mobilfunkteilnehmer immer die aktuellsten Informationen vorliegen.

In einer weitem geeigneten Ausgestaltung der erfindungsgemäßen Einrichtung in einem Mobilfunknetz für Mobilfunkendgeräte sind Filtermittel zur Vorauswahl von Text-und/oder Bildinformationen aus einer Anzahl von Text- und/oder Bildinformationen vorgesehen. Damit kann erreicht werden, dass ein Mobilfunkteilnehmer nicht alle Informationen bzw. Teilinformationen erhält. Ein Mobilfunkteilnehmer wünscht vielleicht nur bestimmte Informationsbereiche, beispielsweise Sport. Er stellt sich daher einen Filter in seinem Mobilfunkendgerät so ein, dass er aus dem Angebot aller Informationsbereiche nur noch die Sportinformationen erhält, welche ihm angezeigt werden. Die Filtermittel können auch auf Seiten des Informationsservers eingesetzt werden. Die Filtermittel können dort so eingestellt sein, dass beispielsweise nur bestimmte Informationsbereiche an geeignete Personenkreise übermittelt werden.

Eine besonders bevorzugte Ausgestaltung der Erfindung ergibt sich ferner dadurch, dass die vollständigen Text- und/oder Bildinformationen als Spiel ausgebildet sind und die Teilinformationen jeweils einen Zugang zu dem Spiel bilden. Dabei wird die Teilinformation mit den Auswahlmitteln ausgewählt, die einen zu einem Spiel, welches als Gewinnspiel ausgebildet sein kann, führt. Das Spiel kann intern mit dem Mobilfunkendgerät gespielt werde, aber auch über das Mobilfunknetz mit anderen Spielpartnern.

Ein vorteilhafter Aspekt der erfindungsgemäßen Einrichtung besteht darin, dass ein zusätzlicher Kanal zum gegenseitigen Datenaustausch zwischen dem Mobilfunkendgerät und dem Mobilfunknetz vorgesehen ist, welcher bei Auswahl einer Teilinformation geöffnet wird. Durch einen solchen Kanal können ggf. Spiele oder sonstige Daten insbesondere zur Vervollständigung von Text- und/oder Bildinformationen geführt werden. Auch Kontrolldaten, beispielsweise zur Überprüfung der Berechtigung eines Mobilfunkteilnehmers, eine vollständige Information abzurufen, können über den zweiten Kanal übermittelt werden.

Entsprechend zur erfindungsgemäßen Einrichtung sieht eine Ausgestaltung des erfindungsgemäßen Verfahrens vor, die sequentiell dargestellten Teilinformationen als Laufschrift auf der Anzeige darzustellen. Alternativ werden die Teilinformationen geblättert bzw. springen nach einem kurzen Augenblick, d.h. der Betrachter muss die Gelegenheit haben die Information zu erfassen, um.

Um die übermittelten Informationen stets aktuell zu halten, werden die Teilinformationen zyklisch durch den Informationsserver ausgetauscht. Der Informationsserver sammelt dazu die aktuellsten Informationen und übermittelt anschließend die Informationen an das Mobilfunkendgerät des Mobilfunkteilnehmers.

Weitere Vorteile ergeben sich aus dem Gegenstand der Unteransprüche, sowie der Zeichnung mit der dazugehörigen Beschreibung.

### Kurze Beschreibung der Zeichnung

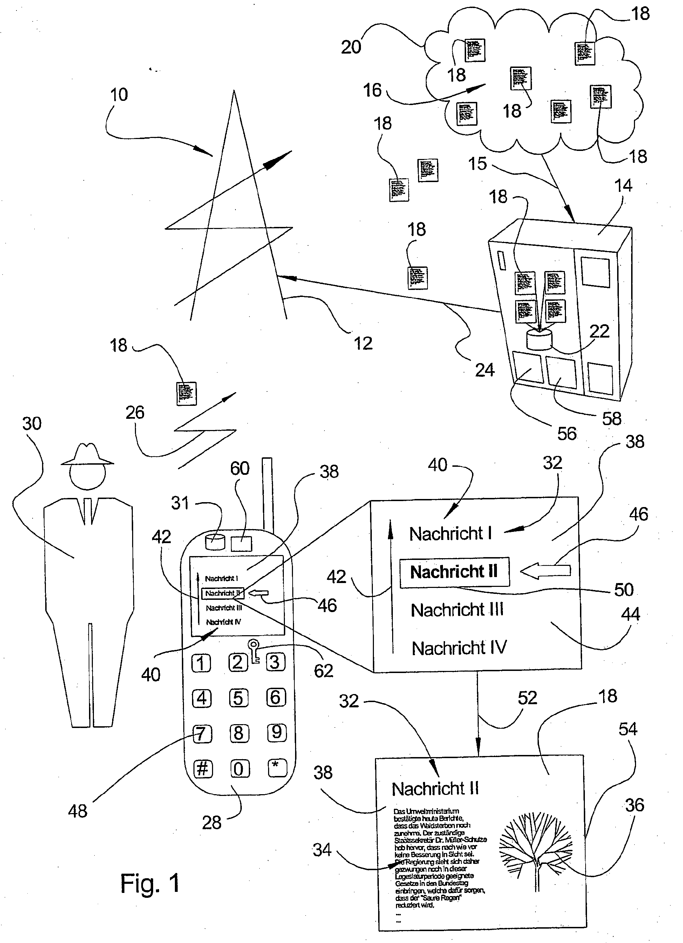

- Fig. 1: zeigt ein Ausführungsbeispiel einer erfindungsgemäßen Einrichtung bzw. des erfindungsgemäßen Verfahrens.

### Bevorzugtes Ausführungsbeispiel

In Fig. 1 wird mit 10 ein Mobilfunknetz, welches beispielsweise nach dem GSM-(=Global System for Communication) oder UMTS-Standard (= Universal Mobile Telecommunications System) arbeitet bezeichnet. Das Mobilfunknetz 10 wird durch einen Funkmast 12 stellvertretend für sämtliche Systemkomponenten eines Mobilfunknetzes 10 symbolisiert. Ein Informationsserver 14 sammelt Informationen 16 in Text und/oder Bild. Im vorliegenden Ausführungsbeislpiel sollen die Informationen 16 Nachrichten 18 sein, welche als Datenblätter dargestellt werden. Grundsätzlich sind aber auch andere Informationsdaten, wie Programme, digitale Daten von Spielen in oder sonstigen digitalen Daten in Text und/oder Bild denkbar. Die Nachrichten 18 werden praktisch von überall her, d.h. weltweit, aus allen Lebensbereichen an den Informationsserver 14 geliefert, Pfeil 15. "Wolke" symbolisiert den weltweiten Informationspool 20.

Die Nachrichten 18 werden zunächst im Informationsserver 14 in einem Datenspeicher 22 gespeichert. Anschließend werden die Nachrichten 18 vom Informationsserver 14 über das Mobilfunknetz 10, Pfeile 24, 26 an Mobilfunkendgeräte 28 von Mobilfunkteilnehmern 30 vollständig oder nur teilweise übermittelt. Die Nachrichten werden in einem Datenspeicher 31 temporär gespeichert. Falls die Nachrichten 18 nur teilweise übermittelt werden, kann auf Anforderung eine Vervollständigung durch den Informationsserver 14 vorgenommen werden.

Die Nachrichten 18 bestehen jeweils aus einer Schlagzeile 32 ggf. mit einer knappen Erläuterung und einem Text- 34 und/oder Bildbestandteil 36 als weiterführende Informationen zur Schlagzeile 32. Die Schlagzeilen 32 werden hier mit Nachricht I, II, III, IV usw. bezeichnet. Nach der Übermittlung der Nachrichten 18 vom Informationsserver 14 an das Mobilfunkendgerät 28 werden dort die Schlagzeilen 32 der Nachrichten 18 als Laufschrift 40 auf einer Anzeige 38 dargestellt. Die Laufschrift 40 verläuft hier langsam in Pfeilrichtung 42, so dass der Mobilfunkteilnehmer 30 noch die Gelegenheit hat, die Schlagzeilen 32 zu lesen. Eine erste Vergrößerung 44 der Anzeige 32 wird neben dem Mobilfunkendgerät 28 gezeigt.

Über die Anzeige 38 laufen nur Teile der gesamten Nachricht 18, nämlich die Schlagzeilen 32. Mit Hilfe eines Cursors 46, wird eine Schlagzeile 32 ausgewählt, beispielsweise Nachricht II. Dazu wird der Cursor 46 vom Mobilfunkteilnehmer 30 mit einem Bedienerfeld 48 des Mobilfunkendgeräts 28 zur Nachricht II gesteuert. Die Nachricht II wird mit dem Bedienerfeld 48 aktiviert. Die Aktivierung wird mit Rahmen 50 angezeigt. Danach erscheint die vollständige Nachricht II mit den weiterführenden Informationen als Text- 34 und/oder Bildbestandteile 36, Pfeil 52. Die vollständige Nachricht 18 wird ebenfalls als zweite Vergrößerung 54 der Anzeige 38 dargestellt. Wenn der Mobilfunkteilnehmer 30 die vollständige Nachricht 18 gelesen hat, kann er über geeignete Bedienung des Bedienerfeldes 48 zu der vorherigen Anzeige gelangen.

Es besteht die Möglichkeit, zunächst nur die Schlagzeilen 32 der Nachrichten 18 vom Informationsserver 14 an das Mobilfunkendgerät 28 zu übermitteln. Dadurch wird innerhalb des Mobilfunkendgeräts 28 Speicherkapazität gespart. Erst wenn eine Schlagzeile 32 aktiviert wird, werden die weiterführenden Informationen als Text- 34 und/oder Bildbestandteile 36 übermittelt. Hierfür kann dann beispielsweise durch einen Gebührenzähler 56 eine Gebühr erhoben werden, die mit dem Mobilfunkteilnehmer 30 abgerechnet wird.

Eine Alternative zu dieser Variante mit der Übersendung von Teilinformationen besteht darin, immer die vollständige Nachricht 18 an das Mobilfunkendgerät 28 zu übermitteln. Dabei wird jedoch immer nur zunächst die Schlagzeile 32 auf der Anzeige 38 angezeigt. Bei Auswahl einer Nachricht 18 mit dem Cursor 46 wird ein dem Informationsserver 14 bzw. dem Gebührenzähler 56 mitgeteilt, dass die vollständige Nachricht 18 abgerufen wurde. Der Gebührenzähler 56 erfasst den Vorgang und kann die Gebühr für die vollständige Information dem Mobilfunkteilnehmer 30 in Rechnung stellen.

Um die Nachrichten 18 immer aktuell zu halten werden ältere bzw. veraltete Nachrichten 18 automatisch aus dem Datenspeicher 31 des Mobilfunkendgeräts 28 gelöscht und dafür neue und aktuelle Nachrichten 18 aus dem Informationspool 20 übermittelt. Dieser Vorgang kann zyklisch in einem vorgebbaren Zeitintervall erfolgen und vom Informationsserver 14 gesteuert werden. Gegebenenfalls kann das Löschen auch manuell durch den Mobilfunkteilnehmer 30 vorgenommen werden. Damit wird erreicht, dass immer nur die aktuellsten Nachrichten 18 angezeigt werden.

Zum Schutz vor unberechtigtem Zugriff auf die vollständigen Nachrichten 18 sind Sperr- bzw. Freigabemittel 62 im Mobilfunkendgerät 28 vorgesehen. Die Sperr- bzw. Freigabemittel 62 können ggf. von dem Informationsserver 14 aus gesteuert werden. Dabei kann die Steuerung der Sperr- bzw. Freigabemittel 62 unter Zusammenwirkung mit dem Gebührenzähler 56 erfolgen.

In dem Informationsserver 14 sind ferner Filtermittel 58 vorgesehen. Mit den Filtermitteln 14 im Informationsserver 14 können die Nachrichten 18 beispielsweise für bestimmte Zielgruppen vorsortiert werden. Auf diese Weise können ausgesuchte Nachrichten an bestimmte Personengruppen übermittelt werden.

Es sind auch Filtermittel 60 im Mobilfunkendgerät 28 vorgesehen, so dass auch der Mobilfunkteilnehmer 30 selbst festlegen kann, welche Nachrichten 18 er zu erhalten wünscht und welche nicht. Die Filtermittel 60 im Mobilfunkendgerät 28 lassen dazu sich weitestgehend frei vom Mobilfunkteilnehmer 30 konfigurieren.

Anstelle der Schlagzeile 32 kann beispielsweise auch ein Programm- oder Spielname übermittelt werden. Durch Aktivieren des Programm- bzw. Spielnamens wird dann anstelle der Nachricht 18 entweder ein Programm aufgerufen oder eine Oberfläche zur Teilnahme an einem Spiel aufgerufen. Der Mobilfunkteilnehmer 30 kann dann das Programm verwenden oder an dem Spiel teilnehmen.

## Patentansprüche

1. Einrichtung in einem Mobilfunknetz (10) für ein Mobilfunkendgerät (28) mit Auswahlmitteln (46, 48, 50) zur Auswahl von Text- und/oder Bildinformationen (32, 34, 36) aus einer Anzahl von Text- und/oder Bildinformationen (32, 34, 36), welche von einem Informationsserver (14) vollständig oder teilweise an das Mobilfunkendgerät (28) übermittelt und temporär in einem Datenspeicher (31) des Mobilfunkendgeräts (28) gespeichert werden, *wobei* Teile der Text- und/oder Bildinformationen (32) in einer Anzeige (38) des Mobilfunkendgeräts (28) sequentiell darstellbar sind, *und* Mittel zur Darstellung der vollständigen Text- und/oder Bildinformationen (32, 34, 36) bei Auswahl der zugehörigen Teilinformation (32) vorgesehen sind, ***dadurch gekennzeichnet, das** Mittel zum Sperren und*/*oder Freigeben (62) der vollständigen Text- und*/*oder Bildinformationen (32, 34, 36) und Gebührenerfassungsmittel (56) vorgesehen sind, wobei die Gebührenerfassungsmittel (56) die Gebühren für die an das Mobilfunkendgerät (28) übermittelten vollständigen Text- und*/*oder Bildinformationen (32, 34, 36), die zur Ansicht ausgewählt wurden, erfassen.*

2. Einrichtung in einem Mobilfunknetz (10) für ein Mobilfunkendgerät (28) mit Auswahlmitteln (46, 48, 50) zur Auswahl von Text- und/oder Bildinformationen (32, 34, 36) aus einer Anzahl von Text- und/oder Bildinformationen (32, 34, 36) nach *Anspruch 1*, **dadurch gekennzeichnet, dass** die sequentiell dargestellten Teilinformationen (32) als Laufschrift (40) auf der Anzeige (38) vorgesehen ist.

3. Einrichtung in einem Mobilfunknetz (10) für ein Mobilfunkendgerät (28) mit Auswahlmitteln (46, 48, 50) zur Auswahl von Text- und/oder Bildinformationen aus einer Anzahl von Text- und/oder Bildinformationen (32, 34, 36) nach einem der Ansprüche 1 *oder 2*, **gekennzeichnet durch** Mittel zum Umblättern und/oder Umspringen der sequentiell dargestellten Teilinformationen (32) auf der Anzeige (38) vorgesehen sind.

4. Einrichtung in einem Mobilfunknetz (10) für ein Mobilfunkendgerät (28) mit Auswahlmitteln (46, 48, 50) zur Auswahl von Text- und/oder Bildinformationen (32, 34, 36) aus einer Anzahl von Text- und/oder Bildinformationen (32, 34, 36) nach einem der Ansprüche 1 bis 3, **gekennzeichnet durch** Mittel zum zyklischen Austauschen der Teilinformationen (32) und/oder der vollständigen Text- und/oder Bildinformationen (34, 36), welche an das Mobilfunkendgerät übermittelt werden.

5. Einrichtung in einem Mobilfunknetz (10) für ein Mobilfunkendgerät (28) mit Auswahlmitteln (46, 48, 50) zur Auswahl von Text- und/oder Bildinformationen (32, 34, 36) aus einer Anzahl von Text- und/oder Bildinformationen (32, 34, 36) nach einem der Ansprüche 1 bis *4*, **dadurch gekennzeichnet, dass** Filtermittel (58, 60) zur Vorauswahl von Text- und/oder Bildinformationen (32, 34, 36) aus einer Anzahl von Text- und/oder Bildinformationen (32, 34, 36) vorgesehen sind.

6. Einrichtung in einem Mobilfunknetz (10) für ein Mobilfunkendgerät (28) mit Auswahlmitteln (46, 48, 50) zur Auswahl von Text- und/oder Bildinformationen (32, 34, 36) aus einer Anzahl von Text- und/oder Bildinformationen (32, 34, 36) nach einem der Ansprüche 1 bis *5*, **dadurch gekennzeichnet, dass** die vollständigen Text- und/oder Bildinformationen (32, 34, 36) als Spiel und/oder Programm ausgebildet sind und die Teilinformationen (32) jeweils einen Zugang zu dem Spiel und/oder Programm bilden.

7. Einrichtung in einem Mobilfunknetz (10) für ein Mobilfunkendgerät (28) mit Auswahlmitteln (46, 48, 50) zur Auswahl von Text- und/oder Bildinformationen (32, 34, 36) aus einer Anzahl von Text- und/oder Bildinformationen (32, 34, 36) nach einem der Ansprüche 1 bis *3*, **dadurch gekennzeichnet, dass** ein zusätzlicher Kanal zum gegenseitigen Datenaustausch zwischen dem Mobilfunkendgerät (28) und dem Mobilfunknetz (10) vorgesehen ist, welcher bei Auswahl einer Teilinformation (32) geöffnet wird.

8. Verfahren für ein Mobilfunkendgerät (28) in einem Mobilfunknetz (10) mit einem Informationsserver (24), welcher eine Anzahl von Text- und/oder Bildinformationen (32, 34, 36) vollständig oder teilweise an das Mobilfunkendgerät (28) übermittelt, wobei die Text- und/oder Bildinformationen (32, 34, 36) temporär in einem Datenspeicher (31) des Mobilfunkendgeräts (28) gespeichert, Teile der Text- und/oder Bildinformationen (32, 34, 36) sequentiell auf einer Anzeige (38) dargestellt und bei Auswahl einer Teilinformation (32) mit Auswahlmitteln (46, 48, 50) die zugehörige vollständige*n* Text- und/oder Bildinformationen (32, 34, 36) auf der Anzeige (38) dargestellt *werden, **dadurch gekennzeichnet, dass** die Text-und*/*oder Bildinformationen (32, 34, 36) zur vollständigen Ansicht auf der Anzeige (38) gesperrt und*/*oder freigegeben werden könnten und Gebühren für die an das Mobilfunlcendgerät (28) übermittelten vollständigen Text- und*/*oder Bildinformationen (32, 34, 36), welche zur Ansicht ausgewählt wurden, erfasst werden.*

9. Verfahren für ein Mobilfunkendgerät (28) in einem Mobilfunknetz (10) nach *Anspruch 8,* **dadurch gekennzeichnet, dass** die sequentiell dargestellten Teilinformationen (32) als Laufschrift (40) auf der Anzeige (38) dargestellt werden.

10. Verfahren für ein Mobilfunkendgerät (28) in einem Mobilfunknetz (10) nach einem der Ansprüche *8 oder 9*, **dadurch gekennzeichnet, dass** die sequentiell dargestellten Teilinformationen (32) jeweils umgeblättert werden bzw. die Anzeige (38) zur nächsten Teilinformation (32) umspringt.

11. Verfahren für ein Mobilfunkendgerät (28) in einem Mobilfunknetz (10) nach einem der Ansprüche *8* bis *10*, **dadurch gekennzeichnet, dass** die Teilinformationen (32) und/oder der vollständigen Text- und/oder Bildinformationen (34, 36) zyklisch durch den Informationsserver (14) ausgetauscht werden.

## Claims

1. A device in a mobile radio network (10) for a mobile terminal (28) comprising selection means (46, 48, 50) for selecting text and/or image information (32 34, 36) from a number of text and/or image information (32, 34, 36), which is completely or partially transmitted by an information server (14) to the mobile terminal (28) and temporarily stored in a data memory (31) of the mobile terminal (28), wherein parts of the text and/or image information (32) can be sequentially represented in a display (38) of the mobile terminal (28), and means are provided for the presentation of the complete text and/or image information (32, 34, 36) in case of a selection of the associated partial information (32), **characterized in that** means for blocking and/or releasing (62) the complete text and/or image information (32, 34, 36) and fee determination means (56) are provided, wherein the fee determination means (56) record the fees of the complete text and/or image information (32, 34, 36) which has been transmitted to the mobile terminal (28) and selected to be viewed.

2. A device in a mobile radio network (10) for a mobile terminal (28) comprising selection means (46, 48, 50) for selecting text and/or image information (32 34, 36) from a number of text and/or image information (32, 34, 36) according to claim 1, **characterized in that** the sequentially presented partial information (32) is provided as a ticker (40) on the display (38).

3. A device in a mobile radio network (10) for a mobile terminal (28) comprising selection means (46, 48, 50) for selecting text and/or image information from a number of text and/or image information (32, 34, 36) according to one of the claims 1 or 2, **characterized by** means for page turning of and/or jumping further in the sequentially presented partial information (32) on the display (38).

4. A device in a mobile radio network (10) for a mobile terminal (28) comprising selection means (46, 48, 50) for selecting text and/or image information (32, 34, 36) from a number of text and/or image information (32, 34, 36) according to one of the claims 1 through 3, **characterized by** means for cyclically exchanging the partial information (32) and/or the complete text and/or image information (34, 36) which is being transmitted to the mobile terminal.

5. A device in a mobile radio network (10) for a mobile terminal (28) comprising selection means (46, 48, 50) for selecting text and/or image information (32, 34, 36) from a number of text and/or image information (32, 34, 36) according to one of the claims 1 through 4, **characterized in that** filter means (58, 50) for the preselection of text and/or image information (32, 34, 36) from a number of text and/or image information (32, 34, 36) are provided.

6. A device in a mobile radio network (10) for a mobile terminal (28) comprising selection means (46, 48, 50) for selecting text and/or image information from a number of text and/or image information (32, 34, 36) according to one of the claims 1 through 5, **characterized in that** the complete text and/or image information (32, 34, 36) is a game and/or program and the partial information (32) respectively forms an access to the game and/or program.

7. A device in a mobile radio network (10) for a mobile terminal (28) comprising selection means (46, 48, 50) for selecting text and/or image information from a number of text and/or image information (32, 34, 36) according to one of the claims 1 through 3, **characterized in that** an additional channel for the mutual data exchange between the mobile terminal (28) and the mobile radio network (10) is provided, which channel will be opened in case of a selection of a partial information (32).

8. A method for a mobile terminal (28) in a mobile radio network (10) comprising an information server (24) which completely or partially transmits a number of text and/or image information (32, 34, 36) to the mobile terminal (28), wherein the text and/or image information (32, 34, 36) is temporarily stored in a data memory (31) of the mobile terminal (28), parts of the text and/or image information (32, 34, 36) are sequentially presented on a display (38) and in case of selecting a partial information (32) by means of selection means (46, 48, 50) the associated complete text and/or image information (32, 34, 36) will be presented on the display (38), **characterized in that** the text and/or image information (32, 34, 36) can be blocked and/or released for being completely viewed on the display and fees for the complete text and/or image information, which has been transmitted to the mobile terminal (28) and has been selected for being viewed, will be recorded.

9. A method for a mobile terminal (28) in a mobile radio network (10) according to claim 8, **characterized in that** the sequentially represented partial information (32) is presented as a ticker (40) on the display (38).

10. A method for a mobile terminal (28) in a mobile radio network (10) according to one of the claims 8 or 9, **characterized in that** the sequentially presented partial information (32) is respectively turned over or the display (38) jumps to the next partial information (32).

11. A method for a mobile terminal (28) in a mobile radio network (10) according to one of the claims 8 through 10, **characterized in that** the partial information (32) and/or the complete text and/or image information (34, 36) is cyclically exchanged by means of the information server (14).

## Revendications

1. Dispositif dans un réseau radio mobile (10) pour un terminal mobile (28) comprenant des moyens de sélection (46, 48, 50) pour sélectionner des informations de texte et/ou d'images (32, 34, 36) dans un nombre d'informations de texte et/ou d'images (32, 34, 36), qui sont complètement ou partiellement transmises au terminal mobile (28) par un serveur d'informations (14) et temporairement mémorisées dans une mémoire de données (31) du terminal mobile (28), des parties des informations de texte et/ou d'images (32) pouvant être séquentiellement présentées sur un écran (38) du terminal mobile (28), et des moyens étant prévus pour représenter les informations de texte et/ou d'images complètes (32, 34, 36), si les informations partielles associées (32) sont sélectionnées, **caractérisé en ce que** des moyens sont prévus pour bloquer et/ou autoriser (62) l'utilisation des informations de texte et/ou d'images complètes (32, 34, 36) et des moyens sont prévus pour enregistrer des frais (56), les moyens d'enregistrement de frais (56) enregistrant les frais par rapport aux informations de texte et/ou d'images complètes, qui ont été transmises au terminal mobile (28) et sélectionnées pour être regardées.

2. Dispositif dans un réseau radio mobile (10) pour un terminal mobile (28) comprenant des moyens de sélection (46, 48, 50) pour sélectionner des informations de texte et/ou d'images (32, 34, 36) dans un nombre d'informations de texte et/ou d'images (32, 34, 36) selon la revendication 1, **caractérisé en ce que** les informations partielles (32) présentées séquentiellement sont prévues comme un bandeau défilant (40) sur l'écran (38).

3. Dispositif dans un réseau radio mobile (10) pour un terminal mobile (28) comprenant des moyens de sélection (46, 48, 50) pour sélectionner des informations de texte et/ou d'images (32, 34, 36) dans un nombre d'informations de texte et/ou d'images (32, 34, 36) selon l'une des revendications 1 ou 2, **caractérisé par** des moyens pour faire défiler et/ou faire avancer les informations partielles (32) présentées séquentiellement sur l'écran (38).

4. Dispositif dans un réseau radio mobile (10) pour un terminal mobile (28) comprenant des moyens de sélection (46, 48, 50) pour sélectionner des informations de texte et/ou d'images (32, 34, 36) dans un nombre d'informations de texte et/ou d'images (32, 34, 36) selon l'une des revendications 1 à 3, **caractérisé par** des moyens pour échanger de manière cyclique les informations partielles (32) et/ou les informations de texte et/ou d'images complètes (34, 36), qui sont transmises au terminal mobile.

5. Dispositif dans un réseau radio mobile (10) pour un terminal mobile (28) comprenant des moyens de sélection (46, 48, 50) pour sélectionner des informations de texte et/ou d'images (32, 34, 36) dans un nombre d'informations de texte et/ou d'images (32, 34, 36) selon l'une des revendications 1 à 4, **caractérisé en ce que** des moyens de filtration (58, 60) sont prévus pour présélectionner des informations de texte et/ou d'images (32, 34, 36) dans un nombre d'informations de texte et/ou d'images (32, 34, 36.

6. Dispositif dans un réseau radio mobile (10) pour un terminal mobile (28) comprenant des moyens de sélection (46, 48, 50) pour sélectionner des informations de texte et/ou d'images (32, 34, 36) dans un nombre d'informations de texte et/ou d'images (32, 34, 36) selon l'une des revendications 1 à 5, **caractérisé en ce que** les informations de texte et/ou d'images complètes (32, 34, 36) sont configurées comme un jeu et/ou un programme et les informations partielles (32) forment un accès au jeu et/ou au programme.

7. Dispositif dans un réseau radio mobile (10) pour un terminal mobile (28) comprenant des moyens de sélection (46, 48, 50) pour sélectionner des informations de texte et/ou d'images (32, 34, 36) dans un nombre d'informations de texte et/ou d'images (32, 34, 36) selon l'une des revendications 1 à 3, **caractérisé en ce qu'**un canal supplémentaire destiné à l'échange de données entre le terminal mobile (28) et le réseau radio mobile (10) est prévu, lequel canal sera ouvert, si une information partielle (32) est sélectionnée.

8. Procédé pour un terminal mobile (28) dans un réseau radio mobile (10) comprenant un serveur d'informations (24), qui transmet complètement ou partiellement un nombre d'informations de texte et/ou d'images (32, 34, 36) au terminal mobile (28), les informations de texte et/ou d'images (32, 34, 36) étant temporairement mémorisées dans une mémoire de données (31) du terminal mobile (28), des parties des informations de texte et/ou d'images (32, 34, 36) étant présentées séquentiellement sur un écran (38), et si une information partielle (32) est sélectionnée à l'aide des moyens de sélection (46, 48, 50), les informations de texte et/ou d'images complètes associées (32, 34, 36) seront présentées sur l'écran, **caractérisé en ce que** les informations de texte et/ou d'images (32, 34, 36) peuvent être bloquées et/ou autorisées à être complètement regardées sur l'écran (38) et des frais pour les informations de texte et/ou d'images complètes (32, 34, 36) transmises au terminal mobile et sélectionnées pour être regardées sont enregistrés.

9. Procédé pour un terminal mobile (28) dans un réseau radio mobile (10) selon la revendication 8, **caractérisé en ce que** les informations partielles (32) séquentiellement présentées sont représentées comme un bandeau défilant (40) sur l'écran (38).

10. Procédé pour un terminal mobile (28) dans un réseau radio mobile (10) selon l'une des revendications 8 ou 9, **caractérisé en ce qu'**on tourne les pages avec les informations partielles (32) séquentiellement présentées ou l'écran (38) affiche l'information partielle (32) suivante.

11. Procédé pour un terminal mobile (28) dans un réseau radio mobile (10) selon l'une des revendications 8 à 10, **caractérisé en ce que** les informations partielles (32) et/ou les informations de texte et/ou d'images complètes (34, 36) sont échangées de manière cyclique par le serveur d'informations (14).
